# EUROPÄISCHE PATENTSCHRIFT

(11) **EP 3 293 115 B1**
(45) Veröffentlichungstag und Bekanntmachung des Hinweises auf die Patenterteilung: **30.10.2019**
(21) Anmeldenummer: 16187609.9
(22) Anmeldetag: 07.09.2016
(51) Int. Cl.: B64C 39/02

(54) **VERFAHREN ZUR STEUERUNG UNBEMANNTER FLUGOBJEKTE**
METHOD FOR CONTROLLING OF UNMANNED AERIAL VEHICLES
PROCEDE DE COMMANDE D'OBJETS VOLANT SANS PILOTE

(43) Veröffentlichungstag der Anmeldung: 14.03.2018
(73) Patentinhaber: Siemens Aktiengesellschaft, 80333 München (DE)
(72) Erfinder: Birchbauer, Josef Alois, 8054 Seiersberg (AT); Hatzl, Jürgen, 7423 Grafenschachen (AT)
(74) Vertreter: Maier, Daniel Oliver

(56) Entgegenhaltungen:
- DE-A1-102011 017 564
- DE-A1-102014 201 238
- US-A1- 2014 316 616
- US-A1- 2016 202 695
- US-A1- 2016 212 345
- US-B1- 9 162 753

## Beschreibung

Die Erfindung betrifft ein Verfahren zur Steuerung unbemannter Flugobjekte.

Verfahren zur Steuerung von UAV (unbemannte Flugobjekte) sind aus US9162753, DE102011017564 oder DE102014201238 bekannt.

Zum Schutz gegen externe Beschädigungen werden Gas- und Ölpipelines durch Trassengänger und/oder durch regelmäßige Befliegung der Trasse mit Flugzeugen oder Hubschraubern beobachtet. Aus der Vogelperspektive lassen sich auch kleine Lecks durch etwaige geringe Bodenverfärbungen erkennen, die vom Boden aus betrachtet gar nicht auffallen würden. Ebenso erkennt man hier die Einrichtung von Baustellen und kann vor Ort nachfragen, ob man dort über die Verhältnisse informiert ist und eine Genehmigung vorliegt. Die Befliegung ist allerdings mit einem gewissen Risiko behaftet, so dass es immer wieder zu Unfällen kommt.

Besonders bedeutsam ist die Überwachung von Leitungen in sogenannten Bergsenkungsgebieten. Das sind Regionen wie beispielsweise das nördliche Ruhrgebiet, wo intensiver, bodennaher Bergbau stattgefunden hat, und jetzt der Erdboden großflächig und langsam (manchmal aber auch ruckartig) nachgibt und sich absenkt. Dadurch wird eine im Boden liegende Pipeline natürlich mitgezogen, sie hängt in Folge durch und kann beschädigt werden. Bei anderen Bodenbewegungen kann es auch zu einer Stauchung der Leitung kommen. Manche Pipelinebetreiber beschäftigen daher Landvermesser, um solche kritischen Bereiche kontinuierlich zu überwachen. Wenn ein gewisses Maß überschritten ist, muss die Leitung aufgegraben und durchgeschnitten werden und dann ein entsprechendes Stück eingesetzt bzw. herausgeschnitten werden.

Bei der Überwachung von Gas- und Ölpipelines, aber auch von elektrische Leitungen aus der Luft kommen vermehrt unbemannte Flugobjekte, sogenannte Drohnen zum Einsatz. Diese sind kostengünstiger als der Einsatz eines Helikopters, kleiner und damit wendiger und bei einem Unfall werden üblicherweise keine Personen gefährdet.

Bei Vermessungs- und Inspektionsaufgaben mittels unbemannter Flugobjekte ist oft die Flughöhe in Bezug auf die erfasste Datenquantität und Datenqualität von entscheidender Bedeutung. Eine größere Flughöhe schafft Überblick und vermindert das Risiko von Kollisionen mit Hindernissen, was insbesondere für das automatische oder semi-automatische Fliegen der unbemannten Flugobjekte anhand von vorgegebenen Routen von Bedeutung ist.

Andererseits profitieren manche der bei den Vermessungs- und Inspektionsaufgaben verwendeten Sensoren von einer möglichst kurzen Aufnahme- bzw. Messdistanz, da die Datenqualität mit der Entfernung abnimmt. Zudem ist gerade bei erhabenen Objekten zusätzlich zur Vogelperspektive ("Nadir") eine Seitenansicht ("oblique") - idealerweise in möglichst flachem Aufnahmewinkel - für Inspektionsaufgaben erforderlich.

Der Erfindung liegt daher die Aufgabe zugrunde, ein Verfahren zur Steuerung von unbemannten Flugobjekten anzugeben, dass diesen Ansprüchen gerecht wird.

Erfindungsgemäß geschieht dies mit einem Verfahren gemäß Anspruch 1.

Vorteilhafte Ausgestaltungen ergeben sich aus den Unteransprüchen.

Die Erfindung ermöglicht die automatisierte Überwachung und Vermessung von Anlagen durch autonom fliegende unbemannte Flugobjekte.

Als besonders vorteilhafte Anwendungsfälle werden insbesondere angesehen:
- die Überwachung und Vermessung eines Lagerbereiches und der darin befindlichen Objekte (Bauteile);
- die Überwachung von Starkstromleitungen;
- die Ortung von Leckagen in Gasleitungen;
- die Messung der Schichtdicke von Erdreich über unterirdisch verlegten Gas- oder Ölpipelines.

Die Erfindung wird anhand von Figuren näher erläutert.

Es zeigen beispielhaft:
Fig. 1 den Ablauf der Befliegung eines Lagerbereichs zur Erfassung von Baugruppen oder Bauteilen von Lagerbeständen.
Fig. 2 den Ablauf der Befliegung einer Hochspannungsstromleitung.
Fig. 3 die Überblicksvermessung einer auf Ständern gelagerten oberirdischen Pipeline.

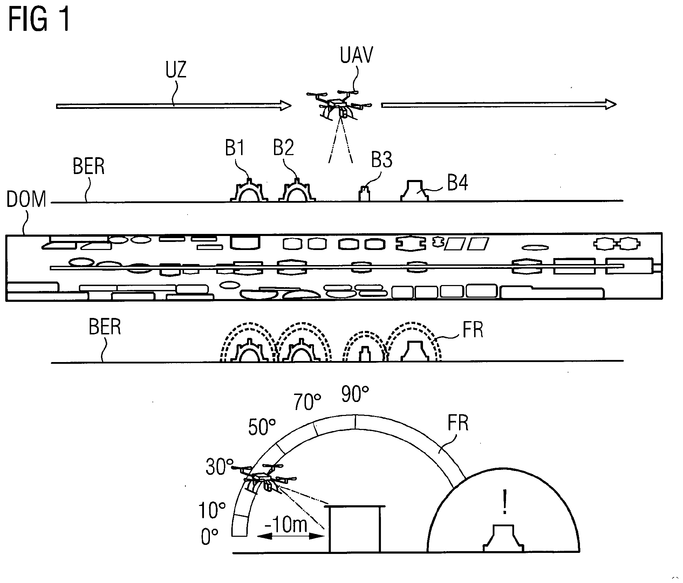

Fig. 1 zeigt schematisch einen Lagerbereich BR mit unterschiedlichen Bauteilen B1, B2, B3, B4. Dieser Lagerbereich kann sich im Freien befinden oder aber auch in einer geschlossenen Räumlichkeit wie z.B. einer Lagerhalle.

Insbesondere bei Großbauteilen B1, B2, B3, B4 mit Abmessungen im Bereich von 5-10 m und darüber stößt die bodennahe Aufnahme und Vermessung schnell an ihre Grenzen, daher bringt in diesem Fall der Einsatz von unbemannten Flugobjekten mit geeigneter Sensorik besondere Vorteile.

Damit können die Bauteile B1, B2, B3, B4 nicht nur lokalisiert und identifiziert, sondern auch hochgenau vermessen und hinsichtlich der Einhaltung von Fertigungstoleranzen überprüft werden, was oftmals die Bedingung für eine spätere Verarbeitung darstellt.

Dabei ist die Messgenauigkeit von der Flughöhe und insbesondere bei Bauteilen B1, B2, B3, B4 mit komplexer Oberfläche auch vom Aufnahmewinkel und der Zahl der Messpunkte abhängig, sodass für gute Messergebnisse Aufnahmen bzw. Messvorgänge von unterschiedlichen Positionen aus erforderlich sind. Die dafür notwendigen Flugbewegungen erhöhen die Gefahr von Kollisionen mit Objekten in der Umgebung.

Gemäß dem erfindungsgemäßen Verfahren erfolgt nun die Steuerung eines zur Erfassung und Vermessung von Objekten in einem Lagerbereich eingesetzten unbemannten Flugobjektes in der Weise, dass vorab für den zu erfassenden und vermessenden Bereich eine weitgehend hindernisfreie Überflugszone UZ festgelegt wird, in welcher das unbemannte Flugobjekt UAV mit geeigneten Sensoren und Aufnahmetechniken Überblicksmessungen des Lagerbereichs BR durchführt.

Diese hindernisfreie Überflugszone UZ wird vorzugsweise in einer Höhe vorgesehen, in der auch die höchsten zu erwartenden Objekte B1, B2, B3, B4 überflogen werden. Sofern der Lagerbereich überdacht ist, wird die Überflugszone UZ unterhalb des Daches bzw. unterhalb von am Dach montierten Elementen wie beispielsweise von Beleuchtungskörpern vorgesehen werden.

In dieser Zone erfolgt eine erste Befliegung und Überblicksvermessung des Lagerbereichs BR .

Auf Basis der Ergebnisse der Überblicksmessungen wird daraufhin ein Überblicksmodell des Lagerbereichs mitsamt den darin befindlichen Objekten ermittelt.

Dabei handelt es sich um ein dreidimensionales digitales Oberflächenmodell DOM, welches beispielsweise mittels photogrammetrischen Verfahren aus überlappenden Fotographien mit unterschiedlichen Positionen, oder aber durch Laservermessung(LiDAR) erstellt werden kann.

Anhand dieses Überblicksmodells DOM wird eine Abfolge von Positionen für Detailmessungen und eine hindernisfreie Flugroute FR für ein unbemanntes Flugmodell UAV zur Einnahme der Abfolge von Positionen ermittelt. Diese Route wird der Steuerung des unbemannten Flugmodells UAV zugrunde gelegt.

Es kann dabei vorteilhaft sein, wenn die Überblicksmessungen und die Detailmessungen von unterschiedlichen unbemannten Flugobjekten UAV durchgeführt werden. Dies insbesondere deswegen, weil dann die unbemannten Flugobjekte UAV mit unterschiedlichen Sensoren ausgestattet sein können und ggf. Überblicks- und Detailmessungen mit unterschiedlichen Verfahren erfolgen können. Dabei wäre es auch denkbar, dass für die Detailmessungen kleine und wendige unbemannte Flugobjekte UAV zum Einsatz kommen, was besonders bei beengten Verhältnissen von Vorteil ist.

Darüber hinaus kann durch den parallelen Einsatz mehrerer unbemannter Flugobjekte UAV die Vermessungszeit verkürzt werden, was insbesondere bei Anwendungsfällen, bei denen die Bauteile B1, B2, B3, B4 nur eine kurze Lagerzeit aufweisen, d.h. die Durchlaufzeit der Bauteile durch das Lager vergleichsweise gering ist, einen weiteren erheblichen Vorteil darstellt.

Die Route FR kann mit bekannten Routingalgorithmen hinsichtlich unterschiedlicher Parameter wie beispielsweise des Zeitaufwandes, des Energieverbrauches oder aber des Kollisionsrisikos optimiert sein.

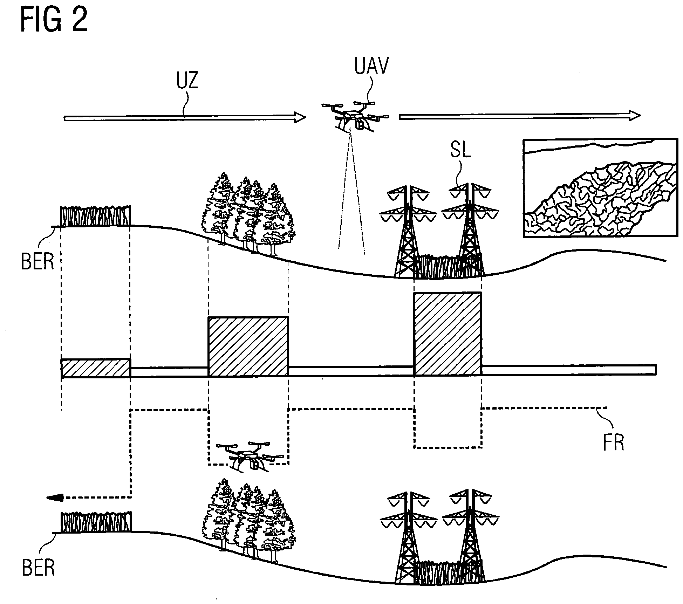

Ein weiterer bevorzugter Anwendungsfall des erfindungsgemäßen Verfahrens wird anhand der Fig. 2 erläutert.

Die Darstellung nach Fig. 2 zeigt den Bereich um zwei als Freileitung ausgeführte elektrische Hochspannungsleitungen HL.

Aufgrund ihrer Abmessungen von vielen Kilometern Länge und einer Höhe von etwa 60 Metern ist die Überwachung dieser Freileitungen eine Aufgabe, die üblicherweise mittels Hubschraubern durchgeführt wird.

Durch den Einsatz unbemannter Flugobjekte UAV können die Kosten der Befliegung erheblich gesenkt und damit die Frequenz der Überwachungsflüge gesteigert und die Qualität der Überwachung erhöht werden.

Dabei wird gemäß der Erfindung das betreffende Gelände in hindernisfreier Höhe überflogen und beispielsweise fotografiert oder mittels LiDAR gescannt.

Neben Aufnahmen im sichtbaren Bereich des Lichtes sind auch Aufnahmen im nahen Infrarotbereich oder mit thermischem Infrarot für bestimmte Anwendungsfälle vorteilhaft. So eignet sich nahes Infrarot mit einer Wellenlänge von 780 nm bis 3 µm (Spektralbereiche IR-A und IR-B) besonders gut zur Detektion von Vegetation, da im nahen Infrarotbereich Chlorophyll eine um etwa den Faktor 6 höhere Reflektivität als im sichtbaren Spektrum aufweist. Zur Erkennung von Vegetation kann dieser Effekt ausgenutzt werden, indem eine Aufnahme im vorzugsweise roten Spektrum des sichtbaren Bereichs, und eine weitere Aufnahme im nahen Infrarot gemacht wird. Nutzobjekte haben sowohl im sichtbaren als auch im nahen infraroten Bereich eine ungefähr gleiche Reflektivität, während Chlorophyll-haltige Vegetation im nahen Infrarot einen deutlich höheren Reflexionsgrad besitzt. Somit können z. B. auch grüne Nutzobjekte von ebenso grüner Vegetation unterschieden werden.

Thermisches Infrarot kann hingegen zur Ermittlung von Lecks in Pipelines herangezogen werden, bei denen Flüssigkeiten oder Gase mit im Vergleich zur Umgebung höherer Temperatur austreten.

Auch bei Hochspannungsleitungen kann die Temperatur der Leiterseile ein Hinweis auf einen Defekt sein und eine thermische Infrarotaufnahme daher wertvolle Daten liefern.

Aus den erfassten Daten und den beispielsweise mittels globaler Satellitennavigationssysteme bestimmten Positionen des unbemannten Flugobjektes UAV wird in der Folge ein dreidimensionales digitales Oberflächenmodell DOM als Überblicksmodell erzeugt.

Als Alternative bzw. Ergänzung zu Satellitennavigationssystemen ist eine Positionsbestimmung mittels Magnetometer, Inertialmesssystemen (IMU)sowie barometrischer Sensoren denkbar.

Aus einer Analyse des Überblicksmodells werden sogenannte "Points of Interests" wie beispielsweise thermisch auffällige Punkte oder vorab festgelegte störungsanfällige Leitungselemente wie z.B. Isolatoren bestimmt und dazu zweckmäßige Positionen für Detailmessungen ermittelt.

Bei der Positionsauswahl sind die verwendete Messmethode und sich daraus ergebende Abstände und Winkel zum Messobjekt, aber auch Sicherheitsbestimmungen zu berücksichtigen, sodass einerseits die Qualität der ermittelten Daten ein Optimum erreicht und andererseits die Kollisionswahrscheinlichkeit bzw. Gefährdung des unbemannten Flugobjektes UAV bei An- und Abflug der Position ein Minimum ist.

So sind bei einer Hochspannungsleitung in Betrieb auch die elektrischen Feldstärken und Magnetfelder zu berücksichtigen, die ggf. die Messgeräte oder die Elektronik des unbemannten Flugobjektes UAV beeinflussen oder stören könnten.

Darüber hinaus bildet auch die Vegetation in Form von Bäumen oder Sträuchern Hindernisse und Gefahrenquellen für die Befliegung.

Aus diesen Daten wird mit bekannten Routingverfahren eine Abfolge von Positionen für Detailmessungen und eine hindernisfreie Flugroute FR für ein unbemanntes Flugmodell UAV zur Einnahme der Abfolge von Positionen ermittelt.

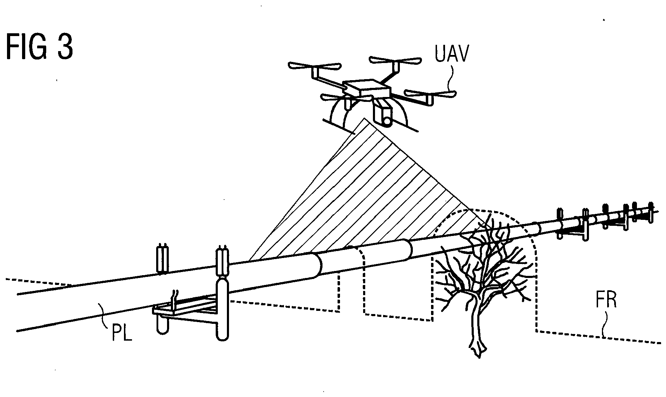

Die Positionen für Detailmessungen können durch die Geometrie des Objektes bestimmt sein. So bietet sich bei Hochspannungsleitungen SL oder, wie in Fig. 3 dargestellt, bei auf Ständern oberirdisch gelagerten Pipelines PL ein Umfliegen der Leitungen in einer vertikalen Schleife an.

Es kann vorteilhaft sein, mehrere unbemannte Flugobjekte UAV mit unterschiedlichen Ausstattungen einzusetzen.

So können etwa für die Überblicksmessungen aus der weitgehend hindernisfreien Überflugszone UZ Flächenflugzeuge eingesetzt werden, welche hohe Geschwindigkeiten erreichen und große Distanzen zurücklegen können.

Die Detailmessungen können hingegen mit Rotorflugzeugen wie beispielsweise Multicoptern durchgeführt werden, die besonders wendig sind und aufgrund ihrer Fähigkeit zum Schwebeflug auch andere Messverfahren ermöglichen.

Dazu können die unbemannten Flugobjekte UAV auch mit unterschiedlichen Messvorrichtungen bestückt sein.

Es kann auch zweckmäßig sein, den Einsatz mehrerer unbemannter Flugobjekte UAV aufeinander abzustimmen, sodass beispielsweise jedem unbemannten Flugobjekt UAV ein bestimmter Abschnitt einer Hochspannungsleitung SL zugewiesen wird. Diese Zuweisung kann auch dynamisch z.B. in Abhängigkeit von den Windverhältnissen und den jeweiligen Reichweiten der unbemannten Flugobjekte UAV erfolgen.

### Bezugszeichenliste

- UAV: unbemanntes Flugobjekt
- UZ: Überflugszone
- DOM: dreidimensionales digitales Oberflächen Modell
- BER: zu erfassender und vermessender Bereich
- FR: hindernisfreie Flugroute
- B1, B2, B3, B4,: gelagerte Bauteile
- SL: Stromleitung
- PL: Pipeline

## Patentansprüche

1. Verfahren zur Steuerung eines zur Erfassung und Vermessung von Objekten in einem vorgegebenen Bereich eingesetzten unbemannten Flugobjektes (UAV) wobei,
- für den zu erfassenden und vermessenden Bereich (BER)eine weitgehend hindernisfreie Überflugszone (UZ) festgelegt wird, in welcher das unbemannte Flugobjekt (UAV) mit geeigneten Sensoren und Aufnahmetechniken Überblicksmessungen des Bereichs durchführt,
**dadurch gekennzeichnet, dass**
- auf Basis der Überblicksmessungen ein dreidimensionales digitales Oberflächen Modell (DOM) des Bereichs (BER) mitsamt den darin befindlichen Objekten ermittelt wird und
- auf Basis des digitalen Oberflächenmodells (DOM) eine Abfolge von Positionen für Detailmessungen und eine hindernisfreie Flugroute (FR) für ein unbemanntes Flugmodell (UAV) zur Einnahme der Abfolge von Positionen ermittelt wird und der Steuerung des unbemannten Flugmodells (UAV) zugrunde gelegt wird.

2. Verfahren nach Anspruch 1, **dadurch gekennzeichnet, dass** als vorgegebener Bereich ein Lagerbereich (BER) mit unterschiedlichen Bauteilen oder Baugruppen (B1, B2, B3, B4) mittels unbemanntem Flugobjekt (UAV) erfasst und vermessen wird.

3. Verfahren nach Anspruch 1, **dadurch gekennzeichnet, dass** als zu erfassendes und vermessendes Objekt eine elektrische Stromleitung (SL) vorgesehen ist.

4. Verfahren nach Anspruch 1, **dadurch gekennzeichnet, dass** als zu erfassendes und vermessendes Objekt eine Pipeline für Flüssigkeiten oder Gase (PL) vorgesehen ist.

5. Verfahren nach einem der Ansprüche 1 bis 4, **dadurch gekennzeichnet, dass** das dreidimensionale digitale Oberflächen Modell (DOM) des Bereichs aus sich überlappenden Fotografien erzeugt wird.

6. Verfahren nach einem der Ansprüche 1 bis 4, **dadurch gekennzeichnet, dass** das dreidimensionale digitale Oberflächen Modell (DOM)des Bereichs aus LiDAR Messungen der unbemannten Flugobjekte (UAV) erzeugt wird.

7. Verfahren nach einem der Ansprüche 1 bis 6, **dadurch gekennzeichnet, dass** mehrere unbemannte Flugobjekte (UAV) mit unterschiedlichen Ausstattungen eingesetzt werden.

## Claims

1. Method for controlling an unmanned aerial vehicle (UAV) used for recording and surveying objects in a specified region, wherein
- a largely obstacle-free flyover zone (UZ) is defined for the region (BER) to be recorded and surveyed, in which zone the unmanned aerial vehicle (UAV) performs overview measurements of the region using suitable sensors and acquisition techniques,
**characterised in that**
- a three-dimensional digital surface model (DOM) of the region (BER) including the objects located therein is determined on the basis of the overview measurements, and
- on the basis of the digital surface model (DOM) is determined a sequence of positions for detailed measurements and an obstacle-free flight route (FR) for an unmanned aerial vehicle (UAV) for adopting the sequence of positions, which route is taken as a basis for controlling the unmanned aerial vehicle (UAV).

2. Method according to claim 1, **characterised in that** as the specified region, a storage area (BER) containing various components or assemblies (B1, B2, B3, B4) is recorded and surveyed by the unmanned aerial vehicle (UAV).

3. Method according to claim 1, **characterised in that** an electrical power line (SL) is provided as the object to be recorded and surveyed.

4. Method according to claim 1, **characterised in that** a pipeline for liquids or gases (PL) is provided as the object to be recorded and surveyed.

5. Method according to one of claims 1 to 4, **characterised in that** the three-dimensional digital surface model (DOM) of the region is produced from overlapping photographs.

6. Method according to one of claims 1 to 4, **characterised in that** the three-dimensional digital surface model (DOM) of the region is produced from LiDAR measurements of the unmanned aerial vehicle (UAV).

7. Method according to one of claims 1 to 6, **characterised in that** a plurality of unmanned aerial vehicles (UAV) having different equipment are used.

## Revendications

1. Procédé pour commander un objet volant sans pilote (UAV) utilisé pour la détection et la mesure d'objets dans une zone prédéfinie, dans lequel,
- une zone de survol sensiblement dépourvue d'obstacles (UZ) est déterminée pour la zone à détecter et à mesurer (BER), dans laquelle l'objet volant sans pilote (UAV) effectue des mesures d'ensemble de la zone à l'aide de capteurs et de techniques d'acquisition appropriés, **caractérisé en ce que**
- un modèle de surfaces numérique tridimensionnel (DOM) de la zone (BER), comprenant les objets se trouvant dans celle-ci, est déterminé sur la base des mesures d'ensemble, et
- une séquence de positions pour des mesures détaillées et un itinéraire de vol dépourvu d'obstacles (FR) pour un modèle réduit volant sans pilote (UAV) intégrant la séquence de positions sont déterminés sur la base du modèle de surfaces numérique (DOM) et servent de base à la commande du modèle réduit volant sans pilote (UAV).

2. Procédé selon la revendication 1, **caractérisé en ce qu'**à titre de zone prédéfinie, une aire de stockage (BER) comprenant différents éléments structurels ou groupes de construction (B1, B2, B3) est détectée et mesurée au moyen d'un objet volant sans pilote (UAV).

3. Procédé selon la revendication 1, **caractérisé en ce que** l'objet à détecter et à mesurer est une ligne électrique (SL) .

4. Procédé selon la revendication 1, **caractérisé en ce que** l'objet à détecter et à mesurer est une canalisation acheminant des liquides ou des gaz (PL).

5. Procédé selon l'une des revendications 1 à 4, **caractérisé en ce que** le modèle de surfaces numérique tridimensionnel (DOM) de la zone est produit à partir de photographies qui se chevauchent.

6. Procédé selon l'une des revendications 1 à 4, **caractérisé en ce que** le modèle de surfaces numérique tridimensionnel (DOM) de la zone est produit à partir de mesures par LiDAR des objets volants sans pilote (UAV).

7. Procédé selon l'une des revendications 1 à 6, **caractérisé en ce que** plusieurs objets volants sans pilote (UAV) possédant des équipements différents sont utilisés.
